# FASCICULE DE BREVET EUROPEEN

(11) **EP 3 684 605 B1**
(45) Date de publication et mention de la délivrance du brevet: **10.08.2022**
(21) Numéro de dépôt: 18780191.5
(22) Date de dépôt: 14.09.2018
(51) Int. Cl.: B29D 30/06

(54) **PRESSE DE CUISSON D'UNE ÉBAUCHE DE PNEUMATIQUE**
VULKANISIERUNGSPRESSE FÜR EINEN REIFENROHLING
CURING PRESS FOR A TYRE BLANK

(30) Priorité: 18.09.2017 FR 1758614
(43) Date de publication de la demande: 29.07.2020
(73) Titulaire: Compagnie Générale des Etablissements Michelin, 63000 Clermont-Ferrand (FR)
(72) Inventeur: MASSOPTIER-DAVID, Michaël, 63040 Clermont-Ferrand Cedex 9 (FR)
(74) Mandataire: Noel, Luminita
(86) Numéro de dépôt international: PCT/FR2018/052255
(87) Numéro de publication internationale: WO 2019/053383

(56) Documents cités:
- EP-A1- 1 935 624
- WO-A1-2017/098158
- FR-A1- 2 236 647
- FR-A1- 2 306 069
- FR-A1- 2 998 830
- JP-A- 2006 312 251
- SU-A1- 872 286
- US-A- 3 704 082

## Description

L'invention concerne la fabrication des pneumatiques et en particulier les moules de cuisson d'une ébauche du pneumatique. Elle concerne en particulier les pneumatiques pour des engins de génie civil tels que ceux utilisés dans les mines.

On connait du document WO 2011/001095 au nom de la demanderesse une presse de cuisson d'une ébauche de pneumatique comprenant des plateaux supérieur et inférieur mobiles à coulissement en direction l'un de l'autre et comprenant des coquilles supérieure et inférieure servant à mouler les flancs de l'ébauche, ainsi que des secteurs latéraux mobiles en direction radiale à l'axe du moule et servant à mouler la bande de roulement. Lors de l'ouverture du moule, le coulissement vers le haut du plateau inférieur entraine le coulissement radial des secteurs par rapport au plateau afin de libérer l'ébauche. A cette fin, chaque secteur est associé à un levier articulé au secteur, relié au bâti du moule et en appui sur une rampe du plateau formant une face orientée en direction de l'axe. Le mouvement de coulissement radial des secteurs facilite le démoulage des sculptures de la bande de roulement.

La fabrication des pneumatiques d'engins de génie civil soulève des problèmes particuliers. En effet, ces pneumatiques sont de très grandes dimensions. De plus, dans les modèles récents, ils comprennent sur leur bande de roulement un grand nombre de rainures relativement fines et profondes qui peuvent avoir une forme complexe (par exemple ondulée, sous forme de crochet, etc.) qui rendent plus délicat le démoulage. Il faut donc disposer d'un mécanisme qui permet de faire reculer les secteurs sur une course plus importante au cours d'un mouvement de coulissement ou d'un mouvement qui soit proche d'un mouvement de coulissement.

On connait des documents WO 2017/098158 et WO 2017/098159 aux noms des demanderesses des presses de cuisson dont les secteurs présentent un recul plus important. Néanmoins, de nouveaux dispositifs sont toujours utiles pour permettre de choisir celui qui est le plus adapté à la cuisson d'une ébauche de pneumatique particulière. En outre, les dispositifs de l'art antérieur présentent l'inconvénient d'être encombrants. Or, il est particulièrement intéressant, notamment pour des raisons logistiques, qu'une ébauche de pneumatique puisse être accueillie par le plus petit moule de cuisson possible. De manière générale, il est particulièrement utile qu'une même presse puisse assurer la cuisson de pneumatiques présentant des dimensions différentes. D'autres presses de cuisson d'une ébauche de pneumatique sont connues des documents EP 1 935 624 et JP 2006 312 251.

Un but de l'invention est donc de faciliter le moulage et le démoulage de pneumatiques destinés à des engins de génie civil.

Un autre but de l'invention consiste à fournir une presse pouvant servir à la cuisson d'un pneumatique de dimensions particulièrement grandes par rapport à celles de la presse.

A cet effet, on prévoit selon l'invention une presse de cuisson d'une ébauche de pneumatique comportant :
- un bâti,
- au moins un plateau monté coulissant par rapport au bâti et comprenant plusieurs pions,
- plusieurs secteurs répartis circonférentiellement autour du plateau, aptes à former toute ou partie de la largeur d'une bande de roulement du pneumatique, et
- pour chaque secteur au moins un basculeur présentant au moins une rampe apte à être parcourue par l'un des pions respectifs.

Le parcours de la rampe du basculeur par le pion entraine le basculement du basculeur qui entraine ensuite lui-même le basculement du secteur auquel il est associé. Ce basculement permet de libérer plus facilement le pneumatique en fin de cuisson, plus particulièrement lorsque le pneumatique est de grandes dimensions par rapport au moule. Le pion présente de préférence des petites dimensions afin d'engendrer un encombrement minimum et d'être ainsi utilisable dans des moules de petites dimensions. On peut prévoir la présence d'autant de basculeurs que de secteurs. On peut également prévoir que chaque secteur est associé à plusieurs basculeurs, par exemple à deux basculeurs. On peut prévoir la présence d'autant de pions que de rampes, chaque pion étant apte à parcourir une des rampes respectives.

Le basculeur peut présenter une forme quelconque compatible avec sa fonction qui consiste à faire basculer le secteur auquel il est associé lorsqu'un pion porté par le plateau parcourt sa rampe. On peut par exemple prévoir qu'il est de forme générale allongée et présente au moins un tronçon rectiligne, par exemple deux tronçons rectilignes inclinés l'un par rapport à l'autre.

Le plateau peut être supérieur ou inférieur tel que vu par rapport à un plan médian passant par le centre du moule formé par les secteurs.

Avantageusement, la presse est agencée de manière à faire coulisser au moins un des secteurs par rapport au bâti sous l'effet d'un coulissement du plateau.

Le coulissement des secteurs s'effectue dans une direction radiale par rapport à un axe de la presse. Ce coulissement peut être en direction opposée à un axe de la presse, on parle alors de recul du secteur, ou en direction de l'axe. On peut prévoir qu'un coulissement vers le haut du plateau permet de faire reculer au moins un des secteurs. Ce recul radial permet de retirer les secteurs sans endommager les sculptures de la bande de roulement lorsque celles-ci sont particulièrement profondes. Il est ainsi particulièrement utile d'obtenir un coulissement sur la course la plus longue possible afin de réduire les risques d'endommagement des sculptures. On peut également prévoir qu'un coulissement vers le bas du plateau permet de faire coulisser au moins un des secteurs en direction de l'axe de la presse.

Avantageusement, le ou chaque pion et la ou chaque rampe sont agencés pour faire basculer le ou chaque secteur à l'issue d'un coulissement des secteurs.

En effet, ce basculement facilite l'extraction du pneumatique qui vient d'être vulcanisé dans le moule. Ce basculement a lieu une fois que chaque secteur a été entièrement dégagé des sculptures de la bande de roulement. De plus, dans une presse classique, il peut arriver que, au début de l'éloignement des secteurs, ceux-ci soient retenus élastiquement par la gomme du pneumatique. Pour y pallier, ce mouvement de basculement permet d'assurer une bonne séparation des secteurs à l'égard de la bande de roulement.

De manière avantageuse, un bord du plateau est apte à être en appui contre le basculeur et à entrainer un basculement de celui-ci.

De cette façon, le bord du plateau permet notamment d'accompagner et d'assurer le passage du secteur d'une position basculée à une position de moulage. Sans cet accompagnement, le basculement permettant le retour à la position de moulage n'est pas garanti et est dû uniquement à la gravité.

On peut prévoir que la presse est agencée de sorte que le bord du plateau entraine un basculement du basculeur lors d'un coulissement du plateau. On peut par exemple prévoir qu'un bord circonférentiel du plateau est apte à être en appui contre une face du basculeur et à entrainer un basculement de celui-ci, ce basculement étant de préférence un basculement en avant, c'est-à-dire en direction de l'axe de la presse. Le coulissement du plateau peut être vers le haut ou vers le bas, de préférence vers le bas. Ainsi, ce basculement a lieu après que l'enveloppe de pneumatique à vulcaniser a été chargée sur le moule et pendant que le moule retrouve une position de moulage.

De préférence, la rampe ou chaque rampe du basculeur comprend deux tronçons rectilignes, chaque tronçon présentant une inclinaison différente par rapport à l'autre.

De tels tronçons peuvent avoir des fonctions différentes. On peut par exemple prévoir qu'un premier tronçon entraine, lorsqu'il est parcouru par un des pions, le basculement du basculeur et donc le basculement du secteur associé à ce basculeur, et qu'un second tronçon, lorsqu'il est parcouru par le même pion, stabilise le basculeur, et donc le secteur, en position basculée. Le risque que le secteur bascule accidentellement et endommage par exemple le pneumatique présent dans le moule est ainsi réduit.

Avantageusement, les pions étant des pions de basculement, au moins un des basculeurs est monté mobile en rotation autour d'un pion de rotation fixe par rapport au bâti, de préférence tous les basculeurs étant montés mobiles en rotation autour d'un pion de rotation respectif fixe par rapport au bâti.

La présence du pion de rotation stabilise la rotation du basculeur et donc celle des secteurs. De cette façon, le basculeur est fixe à coulissement par rapport au bâti et mobile en rotation par rapport à celui-ci, ce qui stabilise encore le mouvement de rotation du basculeur et donc des secteurs. Le pion de rotation peut être fixé directement au bâti ou à un autre élément de la presse qui est lui-même fixe par rapport au bâti.

De manière préférée, la presse comprend en outre une couronne de frettage, le pion ou au moins un des pions de rotation étant porté par la couronne de frettage, de préférence tous les pions de rotation étant portés par la couronne de frettage.

Par exemple, la couronne de frettage peut s'étendre circonférentiellement autour du plateau et des secteurs et être fixe par rapport au bâti.

De préférence, au moins un des secteurs est agencé pour être en appui sur le basculeur et/ou la couronne de frettage de manière à coulisser par rapport au bâti.

Ces appuis respectifs permettent de guider de façon stable le mouvement de coulissement des secteurs, et d'assurer le recul des secteurs sur une grande amplitude afin de démouler convenablement les sculptures des pneumatiques. Un recul stable des secteurs évite qu'ils n'endommagent les sculptures du pneumatique au cours de ce recul. En outre, plus le mouvement de coulissement est stable, plus il est possible de prévoir que ce coulissement se fasse avec une grande amplitude.

On peut prévoir que ce soit la combinaison de l'entrainement provoqué par le coulissement du plateau et de l'appui des secteurs à la fois sur le basculeur et la couronne de frettage qui permet le coulissement des secteurs, et notamment leurs reculs radiaux. L'interaction avec ces trois éléments de la presse permet de stabiliser plus encore le mouvement de coulissement des secteurs. On peut prévoir qu'au moins un des secteurs est en appui sur le bâti au lieu de la couronne de frettage, voire que c'est le cas de tous les secteurs.

Avantageusement, la rampe du basculeur étant une rampe de basculement, au moins un des basculeurs comprend en outre au moins une rampe de coulissement sur laquelle le secteur est apte à être en appui et à coulisser.

Cette rampe permet de guider le coulissement du secteur. En effet, lors d'un coulissement du secteur, notamment lors d'un recul radial, le secteur est en appui sur la rampe de coulissement et coulisse sur celle-ci en suivant la direction de cette rampe. Par exemple, si le secteur parcourt vers le haut une rampe de coulissement inclinée vers le haut lorsqu'on la parcourt en direction opposée à l'axe de la presse, ce parcours entraine un coulissement en direction radiale et opposée à l'axe et permet ainsi un recul radial du secteur. Si le secteur parcourt vers le bas cette même rampe, ce parcours entraine un coulissement en direction de l'axe de la presse.

De manière préférée, la ou chaque rampe de coulissement est rectiligne et inclinée vers le haut lorsqu'on la parcourt en direction opposée à un axe principal du plateau.

Une rampe rectiligne permet de donner au coulissement la plus grande amplitude possible, notamment le plus grand recul possible. Comme indiqué plus haut, une telle orientation permet au secteur, lorsqu'il parcourt la rampe de coulissement vers le haut, d'avoir un mouvement de recul radial. On peut bien entendu prévoir que la rampe a une autre forme, par exemple une forme courbée.

De préférence, au moins un des secteurs comprend au moins un sillon rectiligne présentant une face apte à coopérer avec la rampe de coulissement du basculeur, de préférence au moins un des basculeurs comprend au moins deux rampes de coulissement, le secteur comprenant au moins deux sillons rectilignes comprenant chacun une face apte à coopérer avec une des rampes de coulissement respectives du basculeur.

On peut par exemple prévoir que le sillon comprend une, deux, ou trois faces, au moins une des faces étant apte à coopérer avec la rampe de coulissement. Ce sillon stabilise et guide le mouvement de coulissement du secteur par rapport au basculeur.

La présence de deux sillons et de deux rampes de coulissement permet de stabiliser plus encore le mouvement de coulissement. On peut bien entendu prévoir que chaque basculeur comprend plus de deux rampes de coulissement, par exemple trois, quatre, cinq ou six rampes de coulissement. On peut également prévoir que chaque secteur comprend au moins autant de sillons rectilignes que le basculeur auquel il est associé comprend de rampes de coulissement, chaque sillon présentant une face apte à coopérer avec une des rampes de coulissement respectives.

De préférence, le basculeur comprenant deux rampes de coulissement, les deux rampes sont parallèles et s'étendent chacune en saillie de bords latéraux respectifs du basculeur.

Avantageusement, la presse comprend en outre :
- un deuxième plateau, le premier plateau formant un plateau inférieur et le deuxième plateau formant un plateau supérieur, le plateau supérieur étant monté coulissant par rapport au bâti et comprenant plusieurs pions de basculement,
- plusieurs secteurs répartis circonférentiellement autour du plateau supérieur, aptes à former, avec les secteurs répartis circonférentiellement autour du plateau inférieur, la bande de roulement du pneumatique, et
- pour chaque secteur, au moins un basculeur présentant au moins une rampe apte à être parcourue par l'un respectif des pions de basculement du plateau supérieur.

De cette façon, le moule est divisé en deux parties, une supérieure et une inférieure, pouvant être symétriques entre elles. Dans une telle configuration, on peut prévoir que chaque secteur a une hauteur environ égale à la moitié de celle qu'il aurait eu dans un moule classique. Ainsi, un secteur présent sur la partie inférieure du moule est au contact d'un secteur homologue présent sur la partie supérieure du moule lorsque le moule est fermé, de manière à reproduire une hauteur de secteur classique. Puisque les secteurs ont une hauteur plus faible, on a besoin d'un basculement de chaque secteur moins important par rapport à un moule classique pour obtenir une même ouverture. Par ailleurs, en fonctionnement, la partie supérieure d'un moule a besoin d'être mobile afin qu'on puisse introduire l'ébauche de pneumatique dans le moule et l'en extraire après qu'elle a été vulcanisée. Une presse n'est généralement pas assez robuste pour porter un moule entier et la partie supérieure comprend ainsi généralement uniquement le plateau supérieur. Cependant, la presse est assez robuste pour porter une moitié de moule comme présenté ci-dessus.

L'invention concerne également un procédé de fabrication d'un pneumatique dans lequel on effectue la cuisson du pneumatique dans une presse telle que décrite ci-dessus.

Nous allons maintenant présenter deux modes de réalisation de l'invention donné à titre d'exemple non limitatif et à l'appui des figures annexées sur lesquelles :
- les figures 1A à 1D sont des vues en coupe axiale verticale d'une presse selon un premier mode de réalisation de l'invention au cours d'étapes successives d'une ouverture du moule de cuisson ;
- les figures 2A à 2D sont des vues en coupe axiale verticale de la presse des figures 1A à 1D au cours d'étapes successives d'une ouverture du moule de cuisson, montrant plus particulièrement les interactions entre un pion de basculement et une rampe de basculement ;
- les figures 3A à 3C sont des vues en perspective et éclatées d'une partie inférieure du moule de cuisson des figures 1A à 2D, dans lesquelles un seul secteur et un seul basculeur sont représentés ;
- la figure 3D est une vue en perspective d'un détail de la partie inférieure du moule de cuisson des figures 3A à 3C ;
- les figures 4A et 4B sont des vues respectivement en perspective et d'extrémité du basculeur représenté dans les figures 1Aà 3D ;
- les figures 5A et 5B sont des vues en perspective d'un secteur du moule représenté dans les figures 1A à 4B ; et
- les figures 6A à 6C sont des vues en coupe axiale verticale d'une presse selon un deuxième mode de réalisation de l'invention au cours d'étapes successives d'une ouverture du moule de cuisson.

Nous allons décrire en référence aux figures une presse selon deux modes de réalisation de l'invention. Cette presse sert à la cuisson et à la mise en forme des ébauches de pneumatique de roue. Il peut s'agir d'une roue d'un véhicule tel qu'un véhicule utilitaire, un véhicule de tourisme ou un véhicule de type poids-lourd. En l'espèce, il s'agit d'une presse pour des ébauches de pneumatique d'engins de génie civil tels que ceux utilisés dans les mines.

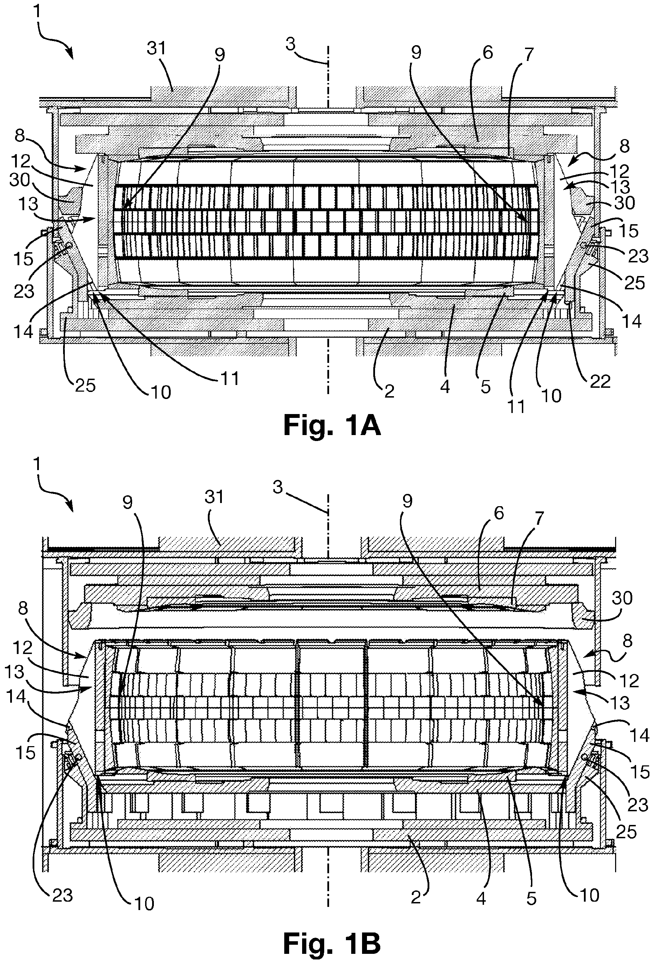

### Premier mode de réalisation (figures 1A à 5B)

La presse 1 comprend un bâti 2 formant un socle du moule, supposé immobile et fixé sur le sol dans la suite. Elle présente une forme générale à symétrie de révolution autour d'un axe vertical 3.

La presse 1 comprend un plateau inférieur 4 portant une coquille 5 rigidement fixée au plateau 4, sur celui-ci. Le plateau 4 est monté mobile à coulissement vertical suivant l'axe 3 par rapport au bâti 2. La presse comprend à cette fin des moyens de guidage et de motorisation qui sont classiques et ne sont pas détaillés ici.

De même, la presse comprend un plateau supérieur 6 auquel est rigidement fixé une coquille supérieure 7 sous le plateau, le plateau étant monté mobile à coulissement vertical suivant l'axe 3 par rapport au bâti 2, ici encore par des moyens de guidage et de motorisation qui sont classiques et ne sont pas détaillés. Afin de permettre l'ouverture du moule, le plateau supérieur 6 coulisse indépendamment du plateau inférieur 4.

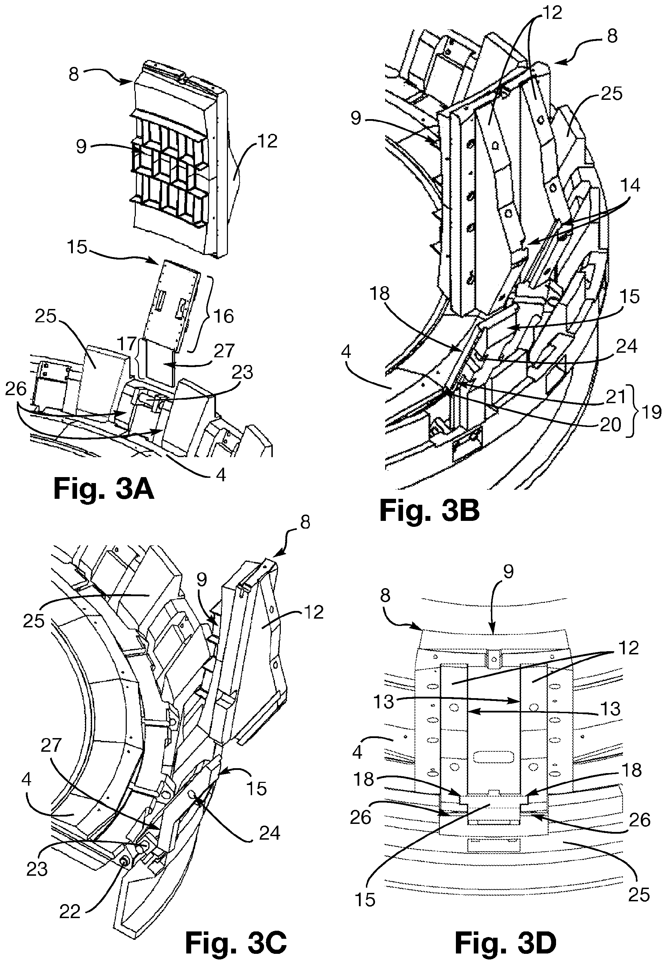

La presse 1 comprend également des secteurs latéraux 8 qui s'étendent en périphérie de la presse. Une presse comprend généralement entre dix et trente secteurs 8. Sur les figures 1A à 1D, neufs secteurs sont représentés. Bien entendu, des secteurs ne sont pas représentés et la presse 1 en comprend en totalité un plus grand nombre. Sur les figures 3A à 3D, un seul des secteurs 8 est représenté. Dans le cas présent, chaque secteur 8 comprend une face avant interne présentant une partie moulante 9 s'étendant suivant la direction verticale et orientée en direction de l'axe 3.

La presse comprend par ailleurs une couronne de serrage 30 qui assure le maintien des secteurs 8 en position lors de la mise en pression de la presse.

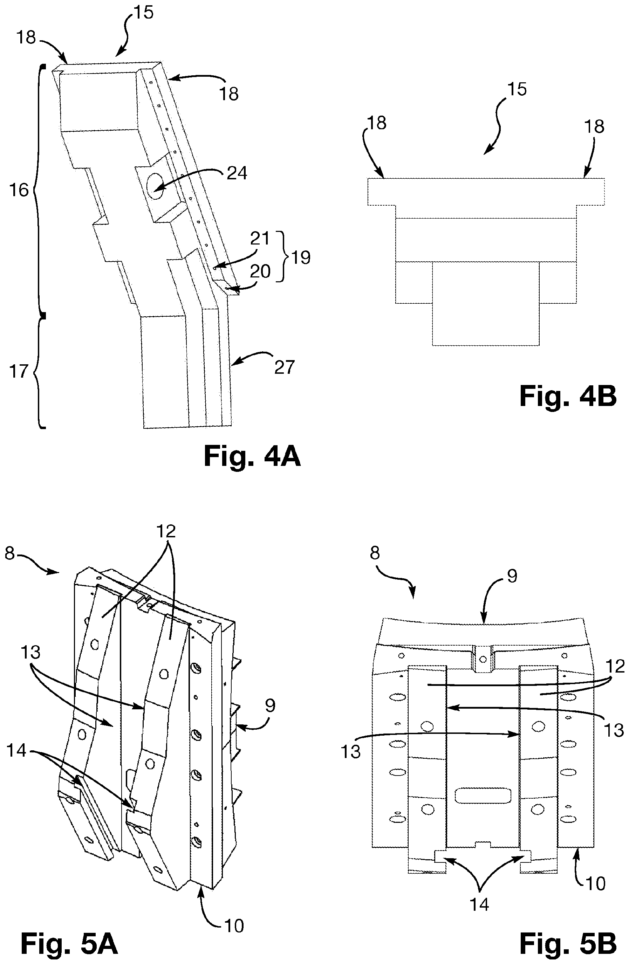

Chaque secteur 8 présente également une face inférieure plane 10 apte à reposer sur une face supérieure 11 du plateau inférieur 4. En partie arrière, du côté opposé à l'axe 6, le secteur comprend deux platines verticales 12 fixées à la partie moulante par leur bord dirigé vers l'axe, parallèles l'une à l'autre et distantes l'une de l'autre, les platines étant symétriques l'une de l'autre par rapport à un plan radial à l'axe 3 (voir figures 5A et 5B). Chaque platine 12 présente une face latérale interne 13 en regard de la face latérale interne 13 de l'autre platine 12. Chaque face latérale interne 13 d'une platine 12 comprend un sillon rectiligne 14 présentant trois faces, à savoir un flanc supérieur, un flan inférieur et un fond. Les sillons 14 sont inclinés vers le haut lorsqu'on les parcourt en direction opposée à l'axe 3 de la presse 1.

Les coquilles 5, 7 et les secteurs 8 forment tous ensemble un moule de cuisson pour le pneumatique. Les coquilles 5, 7 servent principalement à former les flancs latéraux respectifs du pneumatique tandis que les secteurs 8 forment sa bande de roulement comprenant notamment des sculptures parmi lesquelles se trouvent des rainures fines, profondes et/ou de formes complexes. Lors du moulage et de la cuisson, les coquilles 5, 7 et les secteurs 8 forment une enceinte fermée pouvant être mise sous pression et chauffée pour réaliser la vulcanisation de la gomme de l'ébauche en vue de produire le pneumatique. Les moyens de chauffage et de mise sous pression sont classiques et ne seront pas décrit ici.

Le plateau inférieur 4 comprend des pions de basculement 22 répartis à égale distance les uns des autres sur tout le pourtour du plateau inférieur 4. Dans le cas présent, le plateau inférieur comprend autant de pions de basculement 22 que de basculeurs 15. Les pions de basculement 22 ont une forme générale allongée et cylindrique circulaire. Un axe longitudinal principal de chaque pion est horizontal et tangent à la direction circonférentielle à l'axe 3 de la presse.

Les basculeurs 15 comprennent chacun deux parties 16, 17 supérieure et inférieure inclinées l'un par rapport à l'autre (voir figures 4A et 4B). Chaque basculeur 15 comprend deux rampes de coulissement 18 et deux rampes de basculement 19.

Les rampes de coulissement 18 s'étendent en saillie et tout le long des bords latéraux de la partie supérieure 16.

Chaque rampe de basculement 19 comprend deux tronçons inférieur et supérieur 20, 21, le tronçon inférieur 20 étant apte à faire basculer le basculeur 15 lorsque celui-ci est parcouru par un pion de basculement 22, et le tronçon supérieur 21 étant apte à maintenir le basculeur 15 en position basculée lorsque le pion de basculement 22 est en appui sur celui-ci. Les deux tronçons inférieur et supérieur 20, 21 de la rampe de basculement 19 sont chacun rectilignes et inclinés l'un par rapport à l'autre. Chaque basculeur 15 comprend en outre, dans une portion médiane, située dans le cas présent dans la partie supérieure 16, un orifice traversant 24 apte à accueillir un pion de rotation 23.

Dans le cas présent, la presse comprend une couronne de frettage 25 apte à s'étendre circonférentiellement autour du plateau 4 et des secteurs 8. La couronne de frettage 25 est fixe par rapport au bâti 2 et présente une face interne 26 sur laquelle les platines 12 des secteurs 8 sont aptes à être en appui. Dans le mode de réalisation présenté, chaque pion de rotation 23 est directement porté par la couronne de frettage 25.

Chaque secteur 8 est monté mobile à coulissement par rapport à un basculeur 15. Chaque basculeur 15 est monté mobile à rotation par rapport à la couronne de frettage 25.

Lorsque le moule est en position fermée (voir figure 1A), chaque secteur 8 repose par une face inférieure 10 sur un bord supérieur 11 du plateau 4. Un axe longitudinal principal de la partie inférieure 17 du basculeur 15 est parallèle à l'axe de la presse 3. Un axe longitudinal principal de la partie supérieure 16 du basculeur 15 est incliné par rapport à l'axe 3, et est orienté vers le haut lorsqu'on le parcourt en direction opposée à la presse 1. Dans le mode de réalisation présenté, les saillies formées par les rampes de coulissement 18 sont logées à l'intérieur des sillons 14 présents sur les faces latérales internes 13 des platines 12 de façon à ce que le flanc supérieur du sillon 14 soit en appui sur la rampe de coulissement 18. Le pion de basculement 22 est à distance et en regard de la rampe de basculement 19.

Lors du démoulage, dans un premier temps, les plateaux supérieur 6 et inférieur 4 coulissent verticalement vers le haut (voir figure 1B) par rapport au bâti 2. Le coulissement du plateau supérieur est tel qu'il s'éloigne des secteurs, comme on le voit sur la figure 1B. Au préalable, la couronne de serrage 30 a été également déplacée en coulissement vers le haut en l'éloignant des secteurs 8.

Les secteurs 8 étant en appui contre le plateau inférieur 4, ils sont entrainés vers le haut. Chaque secteur 8 est aussi relié à un des basculeurs 15 par un montage à coulissement. La combinaison du coulissement vertical vers le haut du plateau et de cette liaison entraine le coulissement radial de chaque secteur par rapport au plateau. Lors d'un recul radial, chaque secteur 8 parcourt une rampe de coulissement respective d'un des basculeurs 15. Aucun des pions de basculement 22 n'est encore entré en contact avec la rampe de basculement 19 dont il est en regard. Toutefois, chaque pion de basculement 22 s'est rapproché de la rampe de basculement 19. De même, à ce stade, les basculeurs restent immobiles par rapport au bâti.

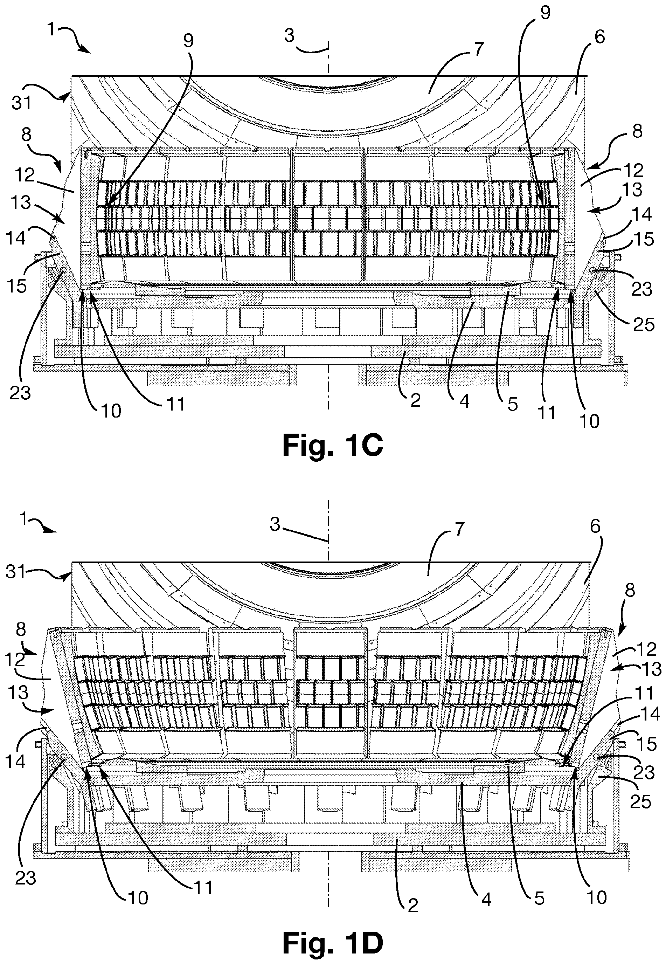

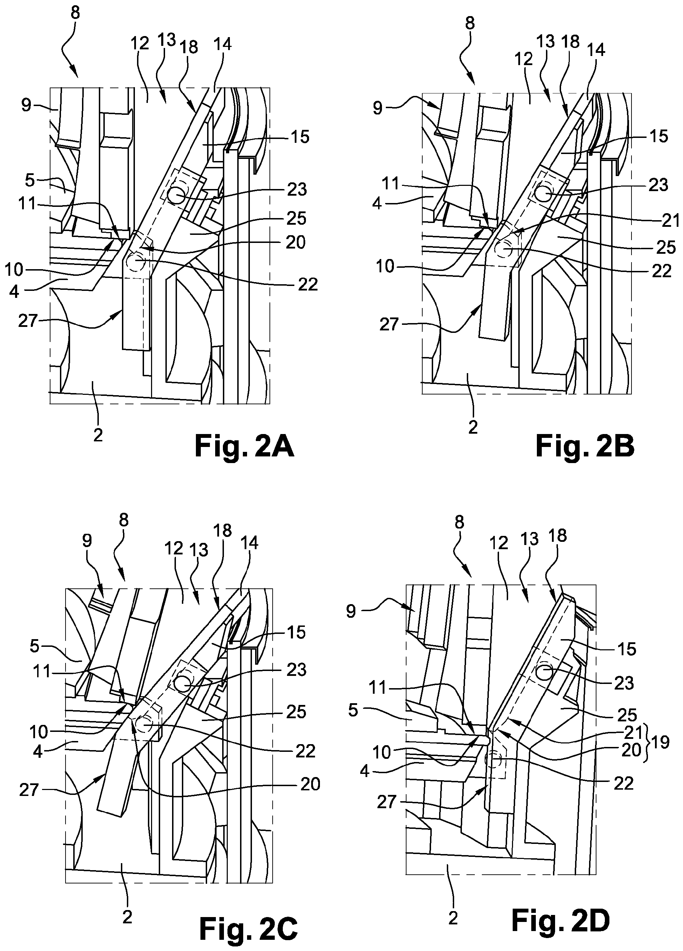

Dans un second temps (voir figure 1C et 2A), le coulissement vers le haut du plateau inférieur 4 se poursuit et le plateau supérieur 6 subit lui un mouvement de rotation selon un axe horizontal de manière à dégager une ouverture supérieure du moule afin que le pneumatique (non représenté) puisse en être extrait. Le pion de basculement 22 est à proximité de la rampe de basculement 19 mais ne l'a pas encore parcourue.

Le mouvement de coulissement vers le haut du plateau 4 se poursuit (voir figure 2B). Le pion de basculement 22 parcourt alors le premier tronçon 20 de la rampe de basculement 19 et entraine ainsi le basculement du basculeur 15 autour du pion de rotation 23 qui entraine avec lui le secteur 8 en basculement en direction opposée à l'axe, c'est-à-dire vers l'extérieur. Il se produit donc une ouverture en corolle de la partie inférieure du moule. Le coulissement du plateau 4 se poursuit jusqu'à obtenir un basculement maximal du basculeur 15 et donc du secteur 8 (voir figure 1D et 2C). Dans cette configuration, le pion de basculement est en appui sur le deuxième tronçon 21 de la rampe de basculement 19 de sorte qu'il maintient le basculeur 15, et donc le secteur 8, en position basculée. Dans cette position, le recul des secteurs est maximal et le basculement de ceux-ci permet d'extraire facilement le pneumatique du moule, sans risquer de l'endommager, et notamment sans risquer d'endommager ses sculptures.

Après que le pneumatique a été extrait, une nouvelle ébauche de pneumatique destinée à être vulcanisée peut être introduite dans le moule. Le plateau inférieur 4 coulisse alors verticalement vers le bas afin de retrouver sa position initiale. Au cours de ce coulissement, un bord circonférentiel du plateau 4 vient en appui contre une face 27 de la partie inférieure 17 du basculeur 15. Cet appui entraine un basculement du basculeur 15, et donc un basculement du secteur 8, en direction de l'axe 3. Comme indiqué précédemment, sans cet appui sur le basculeur 15, le basculement de celui-ci en direction de l'axe 3 ne serait pas assuré ce qui entrainerait l'impossibilité de cuire convenablement l'ébauche de pneumatique nouvellement introduite dans le moule.

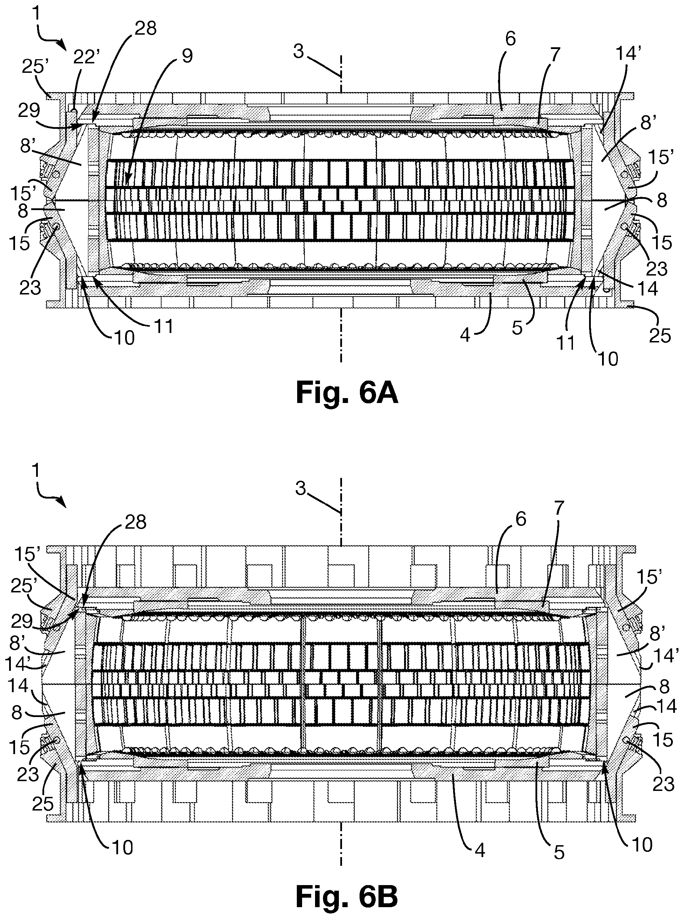

### Deuxième mode de réalisation (figures 6A à 6C)

Ce mode de réalisation diffère du mode de réalisation précédent en ce que le moule est en deux parties sensiblement symétriques par rapport à un plan perpendiculaire à l'axe 3. En effet, dans ce mode de réalisation, la partie supérieure du moule, en plus de comprendre le plateau 6 et la coquille 7 supérieurs, comprend plusieurs secteurs 8' répartis circonférentiellement autour du plateau supérieur, pour chaque secteur 8' un basculeur 15', et une couronne de frettage 25' s'étendant circonférentiellement autour du plateau 6. Les caractéristiques et les agencements de ces pièces sont similaires à ceux présentés dans le mode de réalisation précédent.

Dans ce mode de réalisation, chaque secteur 8, 8' a une hauteur environ deux fois inférieure à celles des secteurs 8 du premier mode de réalisation. Cette différence est compensée par le fait que, pour chaque secteur 8 du plateau inférieur, il existe un secteur 8' homologue autour du plateau supérieur, ces deux secteurs étant complémentaires et formant ensemble un secteur de dimensions similaires à celles des secteurs du premier mode de réalisation (voir figure 6A).

Une autre différence réside dans le fait que la couronne de frettage 25' est mobile à coulissement vertical suivant l'axe 3 par rapport au bâti. De plus, c'est ce coulissement de la couronne de frettage 25', à laquelle les basculeurs 15' sont fixés, qui permet le basculement des secteurs 8'.

En position fermée (voir figure 6A), une face inférieure 10 des secteurs 8 du plateau inférieur 4 est en appui contre une face supérieure 11 du plateau 4. En outre, les platines 12 de chaque secteur 8 sont en appui contre un basculeur 15 et contre la couronne de frettage 25. Un bord supérieur de chaque secteur 8 est en appui contre un bord inférieur d'un secteur 8' homologue présent autour du plateau supérieur 6. Une face supérieure 28 des secteurs 8' est en appui contre un bord inférieur 29 du plateau supérieur 6. En outre, les platines de chaque secteur 8' sont en appui respectif contre un des basculeurs 15' et la couronne de frettage 25'.

Afin d'ouvrir le moule, dans un premier temps, le plateau inférieur 4 coulisse verticalement vers le haut et le plateau supérieur 6 coulisse également vers le haut de manière synchronisée avec le précédent de sorte que les faces supérieures des secteurs 8 du plateau inférieur 4 restent au contact des faces inférieures des secteurs 8' du plateau supérieur 6. La couronne de frettage supérieure 25' coulisse elle aussi verticalement vers le haut dans un mouvement relatif par rapport au plateau supérieur 6 de sorte que les secteurs 8' coulissent sur les rampes de coulissement des basculeurs 15'. Les secteurs 8, 8' coulissent donc de manière synchronisée en direction opposée à l'axe 3 par rapport à leurs plateaux respectifs. Aucun des pions de basculement 22, 22' n'a pour le moment parcouru une rampe de basculement d'un basculeur 15, 15', de sorte qu'aucun des secteurs 8, 8' n'a pour le moment basculé (voir figure 6B).

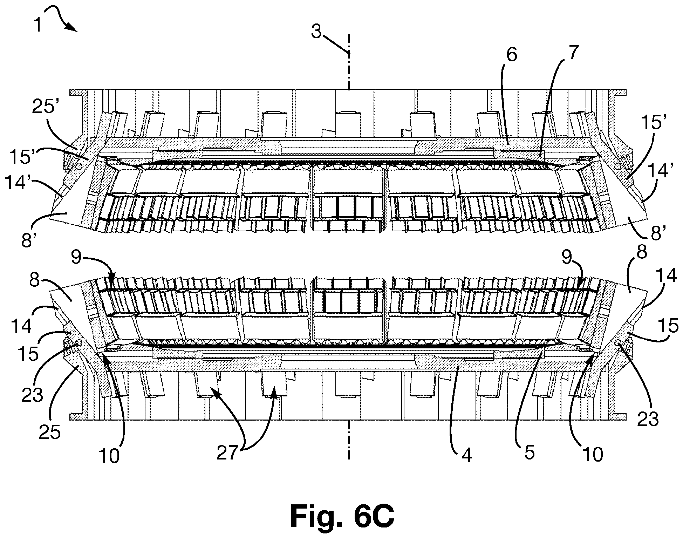

Le plateau supérieur 6 et la couronne de frettage 25' coulissent ensuite de manière synchronisée et dans un mouvement relatif l'un par rapport à l'autre de sorte que les faces inférieures des secteurs 8' du plateau supérieur 6 ne sont plus en contact avec les faces supérieures des secteurs 8 du plateau inférieur 4 (voir figure 6C). Le plateau inférieur 4 coulisse par rapport à la couronne de frettage 25 et de manière synchronisée avec la partie supérieure de la presse où la couronne de frettage 25' coulisse verticalement vers le haut par rapport au plateau supérieur 6, de sorte que les pions de basculement 22, 22' parcourent chacun respectivement une rampe de basculement d'un basculeur 15, 15' de manière à entrainer le basculement des secteurs 8, 8' (voir figure 6C).

Il se produit donc cette fois une ouverture en corolle simultanée des parties inférieure et supérieure du moule.

La partie supérieure du moule pivote alors avec le couvercle 31 de la presse selon un axe horizontal, l'enveloppe de pneumatique peut alors être extraite et une nouvelle ébauche de pneumatique peut être introduite dans le moule.

L'invention n'est pas limitée aux modes de réalisation présentés et d'autres modes de réalisation apparaîtront clairement à l'homme du métier. Ainsi, pour une presse de plus petites dimensions, les secteurs sont déplacés par le coulissement relatif du plateau supérieur par rapport à la frette supérieure.

## Revendications

1. Presse (1) de cuisson d'une ébauche de pneumatique comportant :
- un bâti (2),
- au moins un plateau (4) monté coulissant par rapport au bâti et comprenant plusieurs pions (22),
- plusieurs secteurs (8) répartis circonférentiellement autour du plateau, aptes à former toute ou partie de la largeur d'une bande de roulement du pneumatique, et **caractérisé en ce qu'**elle comporte pour chaque secteur au moins un basculeur (15) présentant au moins une rampe (19) apte à être parcourue par l'un des pions respectifs.

2. Presse (1) selon la revendication précédente, agencée de manière à faire coulisser au moins un des secteurs (8) par rapport au bâti (2) sous l'effet d'un coulissement du plateau (4).

3. Presse (1) selon l'une quelconque des revendications précédentes, dans laquelle le ou chaque pion (22) et la ou chaque rampe (19) sont agencés pour faire basculer le ou chaque secteur (8) à l'issue d'un coulissement des secteurs.

4. Presse (1) selon l'une quelconque des revendications précédentes, dans laquelle un bord du plateau (4) est apte à être en appui contre le basculeur (15) et à entrainer un basculement de celui-ci.

5. Presse (1) selon l'une quelconque des revendications précédentes, dans laquelle la ou chaque rampe (19) du basculeur (15) comprend deux tronçons rectilignes (20, 21), chaque tronçon présentant une inclinaison différente par rapport à l'autre.

6. Presse (1) selon l'une quelconque des revendications précédentes, dans laquelle les pions étant des pions de basculement (22), au moins un des basculeurs (15) est monté mobile en rotation autour d'un pion de rotation (23) fixe par rapport au bâti (2), de préférence tous les basculeurs étant montés mobiles en rotation autour d'un pion de rotation respectif fixe par rapport au bâti.

7. Presse (1) selon l'une quelconque des revendications précédentes, comprenant en outre une couronne de frettage (25), le pion ou au moins un des pions de rotation (23) étant porté par la couronne de frettage, de préférence tous les pions de rotation étant portés par la couronne de frettage.

8. Presse (1) selon l'une quelconque des revendications précédentes, dans laquelle au moins un des secteurs (8) est agencé pour être en appui sur le basculeur (15) et/ou la couronne de frettage (25) de manière à coulisser par rapport au bâti (2).

9. Presse (1) selon l'une quelconque des revendications précédentes, dans laquelle la rampe du basculeur (15) étant une rampe de basculement (19), au moins un des basculeurs comprend en outre au moins une rampe de coulissement (18) sur laquelle le secteur est apte à être en appui et à coulisser.

10. Presse (1) selon la revendication précédente, dans laquelle la ou chaque rampe de coulissement (18) est rectiligne et inclinée vers le haut lorsqu'on la parcourt en direction opposée à un axe principal (3) du plateau (4).

11. Presse (1) selon l'une quelconque des revendication 9 ou 10, dans laquelle au moins un des secteurs (8) comprend au moins un sillon rectiligne (14) présentant une face apte à coopérer avec la rampe de coulissement (18) du basculeur (15), de préférence au moins un des basculeurs (15) comprenant au moins deux rampes de coulissement (18), le secteur comprenant au moins deux sillons rectilignes (14) comprenant chacun une face apte à coopérer avec une des rampes de coulissement respectives du basculeur.

12. Presse (1) selon la revendication précédente, le basculeur comprenant deux rampes de coulissement (18), dans lequel les deux rampes sont parallèles et s'étendent chacune en saillie de bords latéraux respectifs du basculeur (15).

13. Presse (1) selon l'une quelconque des revendications précédentes, comprenant en outre :
- un deuxième plateau, le premier plateau formant un plateau inférieur (4) et le deuxième plateau formant un plateau supérieur (6), le plateau supérieur étant monté coulissant par rapport au bâti (2) et comprenant plusieurs pions de basculement (22'),
- plusieurs secteurs (8') répartis circonférentiellement autour du plateau supérieur, aptes à former avec les secteurs (8) répartis circonférentiellement autour du plateau inférieur (4) la bande de roulement du pneumatique, et
- pour chaque secteur (8'), au moins un basculeur (15') présentant au moins une rampe (19) apte à être parcourue par l'un respectif des pions de basculement du plateau supérieur.

14. Procédé de fabrication d'un pneumatique dans lequel on effectue la cuisson du pneumatique dans une presse selon l'une quelconque des revendications précédentes.

## Patentansprüche

1. Vulkanisierpresse (1) für einen Reifenrohling aufweisend:
- ein Gestell (2),
- wenigstens einen Teller (4), der bezogen auf das Gestell gleitend gelagert ist und mehrere Stifte (22) umfasst,
- mehrere Sektoren (8), die in Umfangsrichtung um den Teller verteilt sind, die geeignet sind, die gesamte oder einen Teil der Breite eines Laufstreifens des Reifens zu bilden, und
**dadurch gekennzeichnet, dass** sie für jeden Sektor wenigstens eine Kippeinrichtung (15) aufweist, die wenigstens eine Rampe (19) aufweist, die geeignet ist, von einem der jeweiligen Stifte abgefahren zu werden.

2. Presse (1) nach dem vorhergehenden Anspruch, die so angeordnet ist, dass sie wenigstens einen der Sektoren (8) bezogen auf das Gestell (2) unter der Wirkung eines Gleitens des Tellers (4) gleiten lässt.

3. Presse (1) nach einem der vorhergehenden Ansprüche, wobei der oder jeder Stift (22) und die oder jede Rampe (19) dafür angeordnet sind, den oder jeden Sektor (8) nach einem Gleiten der Sektoren zu kippen.

4. Presse (1) nach einem der vorhergehenden Ansprüche, wobei ein Rand des Tellers (4) geeignet ist, an der Kippeinrichtung (15) anzuliegen und ein Kippen derselben herbeizuführen.

5. Presse (1) nach einem der vorhergehenden Ansprüche, wobei die oder jede Rampe (19) der Kippeinrichtung (15) zwei geradlinige Teilstücke (20, 21) umfasst, wobei jedes Teilstück eine Neigung aufweist, die von der anderen verschieden ist.

6. Presse (1) nach einem der vorhergehenden Ansprüche, wobei die Stifte Kippstifte (22) sind, wenigstens eine der Kippeinrichtungen (15) um einen Drehstift (23) drehbeweglich gelagert ist, der im Verhältnis zum Gestell (2) fest ist, wobei vorzugsweise alle Kippeinrichtungen drehbeweglich um einen jeweiligen Drehstift gelagert sind, der im Verhältnis zum Gestell fest ist.

7. Presse (1) nach einem der vorhergehenden Ansprüche, ferner umfassend eine Umreifungskrone (25), wobei der Stift oder wenigstens einer der Drehstifte (23) von der Umreifungskrone getragen wird, vorzugsweise alle Drehstifte von der Umreifungskrone getragen werden.

8. Presse (1) nach einem der vorhergehenden Ansprüche, wobei wenigstens einer der Sektoren (8) dafür angeordnet ist, so an der Kippeinrichtung (15) und/oder der Umreifungskrone (25) anzuliegen, dass er im Verhältnis zum Gestell (2) gleitet.

9. Presse (1) nach einem der vorhergehenden Ansprüche, wobei die Rampe der Kippeinrichtung (15) eine Kipprampe (19) ist, wenigstens eine der Kippeinrichtungen ferner wenigstens eine Gleitrampe (18) umfasst, an welcher der Sektor anliegen und gleiten kann.

10. Presse (1) nach dem vorhergehenden Anspruch, wobei die oder jede Gleitrampe (18) geradlinig und nach oben geneigt ist, wenn sie in Richtung entgegen einer Hauptachse (3) des Tellers (4) abgefahren wird.

11. Presse (1) nach einem der Ansprüche 9 oder 10, wobei wenigstens einer der Sektoren (8) wenigstens eine geradlinige Rille (14) umfasst, die eine Fläche aufweist, die geeignet ist, mit der Gleitrampe (18) der Kippeinrichtung (15) zusammenzuwirken, wobei vorzugsweise wenigstens eine der Kippeinrichtungen (15) wenigstens zwei Gleitrampen (18) umfasst, wobei der Sektor wenigstens zwei geradlinige Rillen (14) umfasst, die jeweils eine Fläche aufweisen, die geeignet ist, mit einer der jeweiligen Gleitrampen der Kippeinrichtung zusammenzuwirken.

12. Presse (1) nach dem vorhergehenden Anspruch, wobei die Kippeinrichtung zwei Gleitrampen (18) umfasst, wobei die zwei Rampen parallel sind und sich jeweils von jeweiligen Seitenrändern der Kippeinrichtung (15) hervorstehend erstrecken.

13. Presse (1) nach einem der vorhergehenden Ansprüche, ferner umfassend:
- einen zweiten Teller, wobei der erste Teller einen unteren Teller (4) und der zweite Teller einen oberen Teller (6) bildet, wobei der obere Teller im Verhältnis zum Gestell (2) gleitend gelagert ist und mehrere Kippstifte (22') umfasst,
- mehrere Sektoren (8'), die in Umfangsrichtung um den oberen Teller verteilt sind, die geeignet sind, mit den Sektoren (8), die in Umfangsrichtung um den unteren Teller (4) verteilt sind, den Laufstreifen des Reifens zu bilden, und
- für jeden Sektor (8') wenigstens eine Kippeinrichtung (15'), die wenigstens eine Rampe (19) aufweist, die geeignet ist, von einem jeweiligen der Kippstifte des oberen Tellers abgefahren zu werden.

14. Verfahren zur Herstellung eines Reifens, wobei die Vulkanisierung des Reifens in einer Presse nach einem der vorhergehenden Ansprüche durchgeführt wird.

## Claims

1. Press (1) for curing a green tyre, comprising:
- a frame (2),
- at least one plate (4) that is mounted in a sliding manner with respect to the frame and comprises a plurality of pegs (22),
- a plurality of sectors (8) that are distributed circumferentially around the plate and are able to form all or part of the width of a tread of the tyre, and,
**characterised in that** it comprises for each sector at least one rocker (15) having at least one ramp (19) over which one of the respective pegs is able to pass.

2. Press (1) according to the preceding claim, which is designed so as to cause at least one of the sectors (8) to slide with respect to the frame (2) under the effect of sliding of the plate (4).

3. Press (1) according to either one of the preceding claims, wherein the or each peg (22) and the or each ramp (19) are designed to rock the or each sector (8) after the sectors have slid.

4. Press (1) according to any one of the preceding claims, wherein an edge of the plate (4) is able to bear against the rocker (15) and to cause the latter to rock.

5. Press (1) according to any one of the preceding claims, wherein the or each ramp (19) of the rocker (15) comprises two rectilinear portions (20, 21), each portion having a respectively different inclination.

6. Press (1) according to any one of the preceding claims, wherein, the pegs being rocking pegs (22), at least one of the rockers (15) is mounted so as to be rotatable about a rotation peg (23) that is fixed with respect to the frame (2), preferably all of the rockers being mounted so as to be rotatable about respective rotation pegs that are fixed with respect to the frame.

7. Press (1) according to any one of the preceding claims, also comprising a hooping ring (25), the or at least one of the rotation pegs (23) being carried by the hooping ring, preferably all of the rotation pegs being carried by the hooping ring.

8. Press (1) according to any one of the preceding claims, wherein at least one of the sectors (8) is designed to bear on the rocker (15) and/or the hooping ring (25) so as to slide with respect to the frame (2).

9. Press (1) according to any one of the preceding claims, wherein, the ramp of the rocker (15) being a rocking ramp (19), at least one of the rockers also comprises at least one sliding ramp (18) on which the sector is able to bear and to slide.

10. Press (1) according to the preceding claim, wherein the or each sliding ramp (18) is rectilinear and inclined upwardly when it is passed over in the direction away from a main axis (3) of the plate (4).

11. Press (1) according to either one of Claims 9 and 10, wherein at least one of the sectors (8) comprises at least one rectilinear groove (14) having a face that is able to cooperate with the sliding ramp (18) of the rocker (15), preferably at least one of the rockers (15) comprising at least two sliding ramps (18), the sector comprising at least two rectilinear grooves (14) that each comprise a face that is able to cooperate with one of the respective sliding ramps of the rocker.

12. Press (1) according to the preceding claim, the rocker comprising two sliding ramps (18), wherein the two ramps are parallel and each protrude from respective lateral edges of the rocker (15).

13. Press (1) according to any one of the preceding claims, also comprising:
- a second plate, the first plate forming a lower plate (4) and the second plate forming an upper plate (6), the upper plate being mounted in a sliding manner with respect to the frame (2) and comprising a plurality of rocking pegs (22'),
- a plurality of sectors (8') that are distributed circumferentially around the upper plate and are able to form, with the sectors (8) distributed circumferentially around the lower plate (4), the tread of the tyre, and,
- for each sector (8'), at least one rocker (15') having at least one ramp (19) over which a respective one of the rocking pegs of the upper plate is able to pass.

14. Method for manufacturing a tyre, wherein the tyre is cured in a press according to any one of the preceding claims.
